# FASCICULE DE BREVET EUROPEEN

(11) **EP 0 626 126 B1**
(45) Date de publication et mention de la délivrance du brevet: **05.08.1998**
(21) Numéro de dépôt: 94440033.2
(22) Date de dépôt: 17.05.1994
(51) Int. Cl.: A01B 3/421

(54) **Machine agricole, notamment charrue, pouvant aisément être manoeuvrée depuis le véhicule moteur**
Landmaschine, insbesondere Pflug, welche vom Motorfahrzeug aus leicht bedienbar ist
Agricultural machine, in particular plough, which can be easily operated from the motor vehicle

(30) Priorité: 24.05.1993 FR 9306343
(43) Date de publication de la demande: 30.11.1994
(73) Titulaire: KUHN-HUARD S.A., 44110 Chateaubriant (FR)
(72) Inventeur: Cadorel, Jean-Paul, F-44142 Chateaubriant (FR)
(74) Mandataire: Andres, Jean-Claude

(56) Documents cités:
- EP-A- 0 477 041
- FR-A- 2 558 027
- GB-A- 2 003 371

## Description

La présente invention concerne une machine agricole destinée à être liée à un véhicule moteur et comprenant :
- au moins un dispositif de manoeuvre comportant chacun au moins un organe de manoeuvre destiné à amener ladite machine agricole d'une première position dans une deuxième position ;
- un circuit d'alimentation comportant au moins un distributeur d'alimentation permettant d'alimenter l'(les) organe(s) de manoeuvre du dispositif de manoeuvre correspondant à partir d'une source motrice ;
   et
- un circuit de commande pilotant le circuit d'alimentation et muni d'un organe de commande au moyen duquel l'utilisateur agit sur le circuit d'alimentation depuis le véhicule moteur. Une telle machine est décrite dans EP 0 477 041 A1.

Par le document **"MANUEL D'UTILISATION ET D'ENTRETIEN MULTI-master 120 N° 950511-06/92"** du titulaire, il est connu une charrue réversible à largeur variable. Au travail, celle-ci est liée à l'attelage trois points d'un tracteur qui la tire suivant la direction d'avance au travail. Cette charrue réversible à largeur variable comporte deux vérins hydrauliques : un vérin de repliage et un vérin de retournement, alimentés par la centrale hydraulique du tracteur au travers d'un circuit d'alimentation. Le circuit d'alimentation comporte une valve de séquence permettant d'automatiser le repliage de la charme et son retournement. La valve de séquence alimente d'abord le vérin de repliage, de sorte à rapprocher les corps de labour de l'axe géométrique de retournement, et ensuite le vérin de retournement afin de pivoter le bâti et les corps de labour de 180° autour dudit axe géométrique de retournement. Le vérin de retournement de cette charrue connue est équipé d'un bloc de retournement placé entre la valve de séquence et ledit vérin de retournement. Ce bloc de retournement a pour fonction d'inverser automatiquement l'alimentation du vérin de retournement lorsque le bâti a été pivoté de 90°, de sorte à compléter le retournement du bâti.

Cette charrue réversible connue fonctionne de la manière suivante. En bout de champ, l'utilisateur commence par lever la charrue au moyen du relevage du tracteur. Ensuite, il agit sur le levier de commande du distributeur hydraulique du tracteur, de sorte à alimenter le circuit d'alimentation des deux vérins. Ce faisant, les corps de labour sont rapprochés de l'axe géométrique de retournement, puis le bâti est pivoté de 180° jusque dans son autre position de travail. Pour replacer la charrue dans sa bonne largeur de travail, l'utilisateur amène alors le levier de commande du distributeur hydraulique de sa première position jusque dans une deuxième position dans laquelle le circuit d'alimentation des deux vérins est alimenté en sens opposé. Ceci a pour effet d'allonger le vérin de repliage et de replacer la charrue dans sa bonne largeur de travail. Dans cette charrue connue, l'utilisateur doit donc agir sur le levier de commande du distributeur du tracteur durant tout le déroulement du cyle de retournement.

Dans le document **EP 0 477 041 A1** est décrite une charrue réversible du type "semi-portée". Elle comporte un avant-train lié aux bielles d'attelage du tracteur, et un arrière-train comprenant un bâti qui porte les corps de labour. Ledit bâti est lié à l'avant-train au moyen d'une articulation transversale horizontale et est supporté par une roue liée audit bâti au moyen d'un support de roue pouvant pivoter autour d'un axe transversal horizontal du bâti. Un vérin hydraulique monté entre le bâti et le support de roue permet de régler la position de la roue par rapport au bâti notamment pendant le labour. La charrue étant réversible, son retournement est assuré par un système connu à deux vérins.

Le vérin de réglage de la position de la roue est alimenté en fluide sous pression par une pompe hydraulique à travers une électrovanne à trois positions actionnée grâce aux signaux émis par un dispositif électronique. Ce dispositif électronique comprend un calculateur qui traite les signaux reçus de capteurs en fonction des paramètres inhérents à la charrue et mémorisés dans le dispositif, et élabore à partir de ceux-ci les signaux de commande de l'électrovanne.

Les capteurs sont des capteurs de variation angulaire. Un premier capteur de variation angulaire mesure la rotation de l'arrière-train par rapport à la bielle supérieure de l'attelage du tracteur, tandis qu'un deuxième capteur de variation angulaire mesure la rotation du support de roue par rapport au bâti. Un troisième capteur compte les tours effectués par la roue et un quatrième capteur est un contacteur qui est actionné lorsque le bâti a effectué environ un quart du retournement pour passer dans la position de transport.

Le dispositif est couplé à une console située sur le tracteur près de l'utilisateur.

Grâce à ce dispositif, l'entrée de raie, le maintien de la profondeur de labour et la sortie de raie sont entièrement gérés par le calculateur. L'entrée de raie, respectivement la sortie de raie sont initialisées, après armement du dispositif, par l'abaissement, respectivement le relevage des bielles d'attelage de l'attelage du tracteur.

Dans cette charrue connue, l'électrovanne d'alimentation commandant le vérin de réglage de la position de la roue est pilotée par le calculateur qui nécessite des informations en provenance de divers capteurs installés sur la charrue.

Le but de la présente invention est d'automatiser le passage d'une machine agricole d'une première position dans une deuxième position sans faire appel à un dispositif à calculateur et à capteurs.

A cet effet, la machine agricole selon l'invention est caractérisée en ce que :
a) le circuit de commande comporte au moins un temporisateur servant à piloter le distributeur d'alimentation durant une durée de fonctionnement prédéterminée correspondante;
b) l'organe de commande est un organe de commande à impulsion de sorte que, dès l'instant où l'utilisateur donne ou a donné une impulsion sur l'organe de commande, le circuit de commande pilote automatiquement le circuit d'alimentation du (des) dispositif(s) de manoeuvre correspondant(s) pour amener ladite machine agricole de sa première position dans sa deuxième position.

Dès que l'utilisateur donne ou a donné une impulsion sur l'organe de commande, le circuit de commande pilote automatiquement le circuit d'alimentation du (des) dispositif(s) de manoeuvre correspondant(s) pour amener ladite machine agricole de sa première position dans sa deuxième position. L'utilisateur n'est donc plus obligé d'agir sur un organe de commande durant tout le déroulement du cycle mais a, au contraire, les mains libres pour manoeuvrer le tracteur en toute sécurité.

En outre, cette automatisation de l'alimentation du (des) dispositif(s) de manoeuvre a pu être obtenue en utilisant simplement un circuit de commande comportant au moins un temporisateur.

Il pourra par ailleurs être prévu que le circuit de commande comporte au moins deux temporisateurs et que le deuxième temporisateur démarre au moins sensiblement lorsque la première durée de fonctionnement est écoulée, de sorte à piloter différemment le distributeur d'alimentation ou à piloter un autre distributeur d'alimentation.

Il pourra en outre être avantageusement prévu que les durées de fonctionnement des temporisateurs puissent être rallongées ou raccourcies au moyen d'un élément de réglage centralisé. De ce fait, si la machine agricole est destinée à être attelée à des tracteurs dont les débits des pompes hydrauliques sont différents, les durées de fonctionnement des temporisateurs peuvent être adaptées aisément au débit de la pompe hydraulique du tracteur choisi.

Il pourra aussi être avantageusement prévu que la durée de fonctionnement de chaque temporisateur soit ajustable au moyen d'un élément de réglage respectif. L'utilisateur a ainsi la possibilité d'ajuster les durées de fonctionnement des différents temporisateurs indépendamment les unes des autres.

Il pourra du reste être avantageusement prévu que le circuit de commande comporte des éléments destinés à être implantés sur le véhicule moteur près de l'utilisateur pour indiquer à l'utilisateur l'état d'avancement du cycle sans qu'il soit obligé, pour celà, de se tourner vers la machine.

Ces éléments pourront être des voyants s'allumant au fur et à mesure de l'avancement du cycle.

Il pourra également être prévu :
- que chaque distributeur d'alimentation comporte une commande électrique
   et
- que le circuit de commande comporte un boîtier de commande destiné à être implanté sur le véhicule moteur et des câbles électriques liant ladite (lesdites) commande(s) électrique(s) audit boîtier de commande.

Pour permettre à l'utilisateur de laisser le boîtier de commande sur le véhicule moteur après avoir déposé la machine agricole, lesdits câbles électriques pourront être liés au boîtier de commande au moyen d'un connecteur. Ce dernier pourra donc être aisément retiré du boîtier de commande si l'utilisateur le désire. Un tel agencement autorise par ailleurs un remplacement aisé du boîtier de commande.

En outre, le boîtier de commande pourra également avantageusement comporter un sélecteur de machine permettant d'utiliser ledit boîtier de commande pour une autre machine du même constructeur par exemple. En effet, en agissant sur un tel sélecteur de machine, il sera par exemple possible de modifier l'ordre de fonctionnement, la durée de fonctionnement et le nombre de temporisateurs utilisés. Grâce à cet agencement, un même boîtier de commande pourra être utilisé pour toute une gamme de machines agricoles différentes.

Avantageusement, le circuit d'alimentation de la machine agricole selon l'invention pourra également comporter un distributeur hydraulique pouvant occuper deux positions : une première position dans laquelle le fluide en provenance de la source motrice retournera directement à ladite source motrice sans alimenter le(s) dispositif(s) de manoeuvre, et une deuxième position dans laquelle le fluide en provenance de la source motrice pourra être utilisé par le(s) distributeur(s) d'alimentation pour alimenter le(s) dispositif(s) de manoeuvre. En pilotant de manière adéquate ce distributeur hydraulique, la machine agricole selon l'invention pourra être attelée indifféremment à un tracteur comportant une pompe hydraulique à cylindrée fixe (source motrice) ou à un tracteur comportant une pompe hydraulique à cylindrée variable (source motrice).

Dans ce cas, ledit distributeur hydraulique sera avantageusment commandé depuis le boîtier de commande au moyen d'un sélecteur de pompe. En fonction de la position de ce sélecteur de pompe, le boîtier de commande tiendra alors compte du type de pompe utilisé.

Il pourra en sus être avantageusement prévu, lorsque la machine agricole sera arrivée ou sera dans sa deuxième position, qu'une autre impulsion sur l'organe de commande de la part de l'utilisateur, pilote automatiquement le circuit d'alimentation, de sorte à replacer ladite machine agricole dans sa première position.

L'invention intéresse notamment les machines agricoles travaillant en aller et en retour et dans lesquelles la première position et la deuxième position sont des positions de travail respectives.

Le circuit de commande pourra également comporter un sélecteur de mode ou équivalent permettant de sélectionner au moins deux modes de fonctionnement : un premier mode de fonctionnement dans lequel le circuit de commande pilotera automatiquement le circuit d'alimentation dès que l'utilisateur donnera ou aura donné une impulsion sur l'organe de commande, et au moins un deuxième mode de fonctionnement.

Dans ce deuxième mode de fonctionnement, l'utilisateur pourra par exemple piloter manuellement le(s) distributeur(s) d'alimentation durant le laps de temps qu'il désire.

En outre, dans un mode de fonctionnement différent du premier mode de fonctionnement, il pourra être prévu que la machine agricole selon l'invention puisse être amenée, sous l'action d'une impulsion sur l'organe de commande ou équivalent, automatiquement de sa première position ou de sa deuxième position dans une troisième position.

Lorsqu'elle sera arrivée ou sera dans sa troisième position, une autre impulsion sur ledit organe de commande ramènera automatiquement ladite machine agricole dans la première position ou dans la deuxième position.

Préférentiellement, la troisième position sera une position de transport.

En sus, il pourra être très intéressant que la machine agricole selon l'invention soit portée par le véhicule moteur lorsque l'utilisateur donnera une impulsion sur l'organe de commande.

La présente invention trouve une application particulièrement intéressante dans le domaine des charrues réversibles et notamment des charrues réversibles à largeur variable.

D'autres caractéristiques de l'invention apparaissent dans la description suivante de trois exemples de réalisation non limitatifs faite en référence au dessin annexé sur lequel :
- la figure 1 représente une vue de dessus partielle d'une première machine agricole selon l'invention placée dans une position de travail et attelée à un véhicule moteur;
- la figure 2 représente une vue, suivant la flèche II de la figure 1, de la partie avant de ladite première machine agricole ;
- la figure 3 représente le schéma hydraulique du circuit d'alimentation et du dispositif de manoeuvre ;
- la figure 4 représente le boîtier de commande de ladite première machine agricole ;
- la figure 5 représente le cycle de commande du circuit d'alimentation ;
- la figure 6 représente le circuit de commande pilotant le distributeur d'alimentation ;
- la figure 7 représente le schéma hydraulique du circuit d'alimentation et de deux dispositifs de manoeuvre d'une deuxième machine agricole selon l'invention ;
- la figure 8 représente le boîtier de commande de la deuxième machine agricole ;
- la figure 9 représente le cycle de commande du circuit d'alimentation de la figure 7 ;
- la figure 10 représente le schéma hydraulique du circuit d'alimentation et de deux dispositifs de manoeuvre d'une troisième machine agricole selon l'invention ;
- la figure 11 représente le boîtier de commande de la troisième machine agricole ; et
- la figure 12 représente le cycle de commande du circuit d'alimentation de la figure 10.

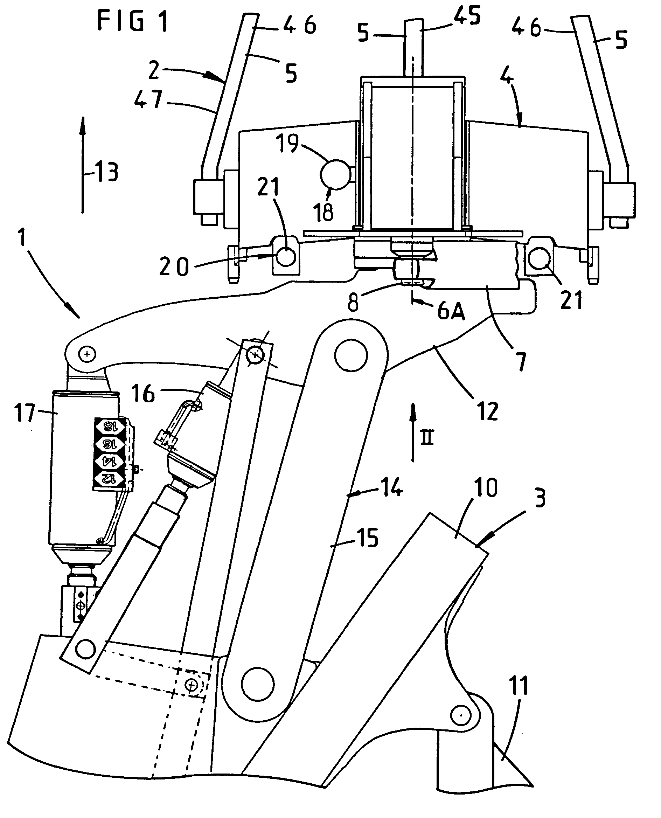

Les figures 1 à 6 montrent une charrue réversible portée (1) selon l'invention. Celle-ci est attelée à un tracteur agricole (2).

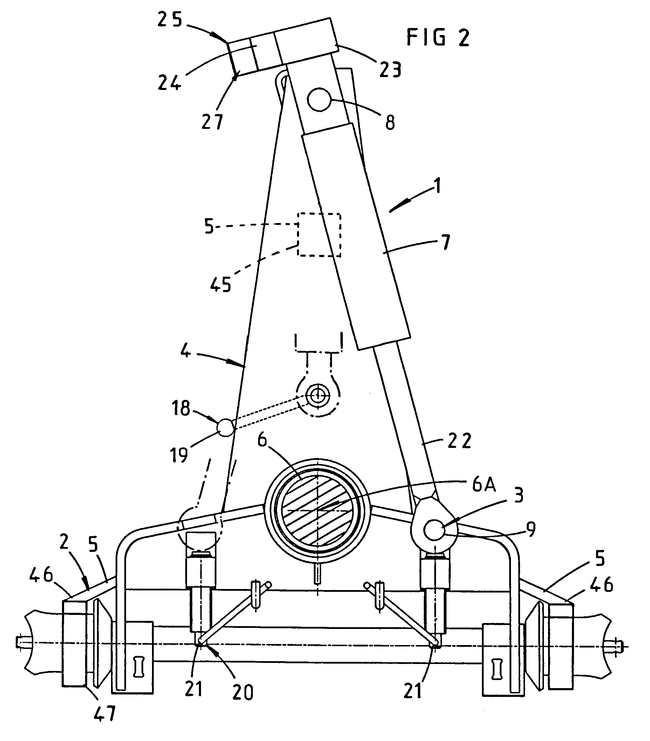

La charrue réversible (1) se compose d'un corps (3) et d'une structure d'attelage (4). La structure d'attelage (4) est destinée à être liée, à sa partie frontale, à l'attelage trois points arrière (5) du tracteur agricole (2). Le corps (3), quant à lui, est lié à la structure d'attelage (4) au moyen d'une liaison pivot (6) d'axe de pivotement (6A) dirigé vers l'avant. Le corps (3) de la charrue (1) peut être pivoté autour dudit axe de pivotement (6A) dans l'une ou l'autre de deux positions de travail, ou dans une position de transport médiane (figures 1 et 2).

La mise dans la position angulaire souhaitée et le maintien dans celle-ci sont réalisés par un vérin de retournement (7). Celui-ci est un vérin hydraulique à double effet. Le vérin de retournement (7) est articulé, à l'une de ses deux extrémités longitudinales, à la structure d'attelage (4) et à son autre extrémité au corps (3), au moyen d'une articulation (8, 9) respective d'axe dirigé vers l'avant. Grâce à cet agencement, le corps (3) de la charrue (1) peut être pivoté d'au moins sensiblement 180° autour de l'axe de pivotement (6A), de l'une de ses positions de travail jusque dans son autre position de travail. Ceci autorise le travail en aller et en retour.

Tel que visible sur la figure 1, le corps (3) de la charrue (1) comporte une console frontale (12) et un bâti (10). La console frontale (12) est liée à la structure d'attelage (4) au moyen de ladite liaison pivot (6), de sorte à pouvoir être retournée par pivotement. Le bâti (10), quant à lui, est lié à la console frontale (12) à l'aide d'un dispositif de liaison (14) permettant de régler le déport, le dévers, ainsi que la largeur de travail de la charrue (1). A cet effet, le dispositif de liaison (14) comporte une bielle (15), un vérin de réglage du déport et du dévers (16), et un vérin de réglage de la largeur de travail (17). Ces éléments (15, 16, 17), leur agencement et plus généralement le corps (3) de cette charrue (1) sont décrits en détail dans le document EP 0 358 537 A1. Comme le corps (3) est connu de l'homme de l'art, il ne sera pas décrit plus en détails.

Tel que visible sur les figures 1 et 2, la charrue (1) selon l'invention comporte également un dispositif de verrouillage mécanique (18) du corps (3) dans sa position de transport. Ce dispositif de verrouillage mécanique (18) comprend un verrou (19) guidé dans la structure d'attelage (4). Lorque le corps (3) est amené et maintenu dans sa position de transport au moyen du vérin de retournement (7), le verrou (19) peut être coulissé jusque dans un orifice (non représenté) de la console frontale (12) du corps (3). Cet orifice (non représenté) se situe avantageusement dans le proche voisinage de l'articulation (9) liant le vérin de retournement (7) à la console frontale (12).

Sur les figures 1 et 2, il apparaît aussi que la charrue (1) comporte un dispositif (20) de réglage de l'aplomb des corps de labour (11). Le dispositif de réglage de l'aplomb (20) est implanté entre la structure d'attelage (4) et le corps (3), de sorte à limiter le pivotement du corps (3) par rapport à la structure d'attelage (4). Dans l'exemple ci-représenté, le dispositif de réglage de l'aplomb (20) comporte deux butées réglables (21) qui sont solidaires de la structure d'attelage (4) et qui sont destinées à limiter le déplacement de la tige (22) du vérin de retournement (7).

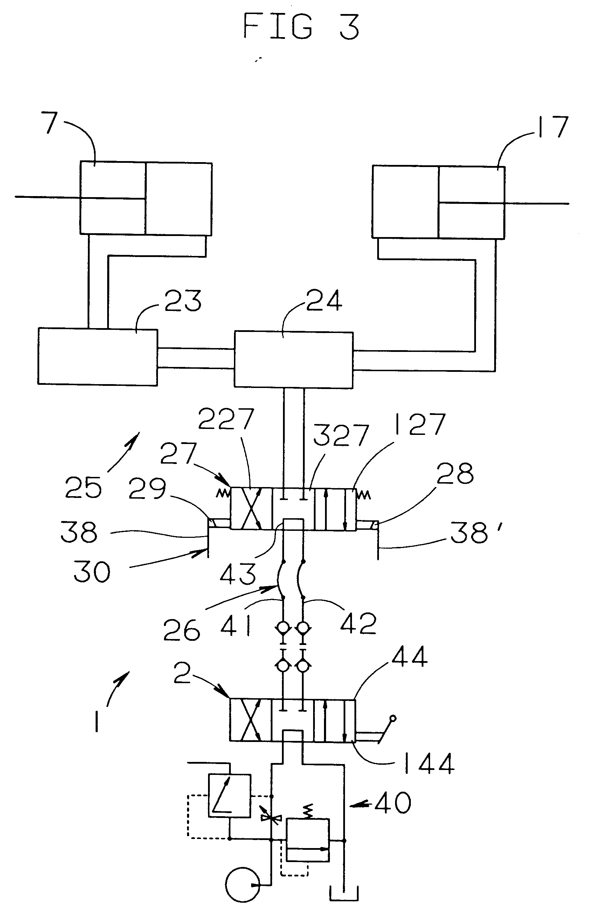

Durant le premier quart de tour du retournement, la longueur du vérin de retournement (7) diminue, tandis que durant le deuxième quart de tour, la longueur du vérin de retournement (7) augmente. Ce résultat est obtenu grâce à un bloc de retournement (23) connu de l'homme de l'art et qui pilote automatiquement le vérin de retournement (7) (figures 2 et 3). Par ailleurs, entre le bloc de retournement (23) et le vérin de réglage de la largeur de travail (17) est implantée une valve de séquence (24) (figure 3), dont le fonctionnement est connu de l'homme de l'art. Dans cet exemple de réalisation selon l'invention, le vérin de retournement (7), le bloc de retournement (23), le vérin de réglage de la largeur de travail (17) et la valve de séquence (24) forment un dispositif de manoeuvre (25) destiné à amener le corps (3) dans ses positions de travail ou dans sa position de transport. L'alimentation du dispositif de manoeuvre (25) est réalisé depuis le tracteur (2) au moyen d'un circuit d'alimentation (26). Celui-ci comporte un distributeur d'alimentation (27) pouvant occuper deux positions ouvertes (127, 227) et une position fermée (327). La mise dans la position ouverte désirée (127, 227) s'effectue à l'aide d'un électro-aimant (28, 29) respectif, tandis qu'au repos - c'est-à-dire lorsque aucun des électro-aimants (28, 29) n'est alimenté - le distributeur (27) retourne automatiquement dans sa position fermée.

Comme visible sur les figures 3, 4 et 6, le distributeur d'alimentation (27) est piloté par un circuit de commande (30). Ce dernier comporte un boîtier de commande (31) destiné à être implanté sur le tracteur (2) dans le voisinage du conducteur.

Le boîtier de commande (31) comprend un sélecteur de mode (32) pouvant occuper trois positions : une position "MANUEL", une position "ARRET" et une position "AUTO". Dans sa position "MANUEL", l'utilisateur peut piloter manuellement le distributeur d'alimentation (27) au moyen d'un levier de commande (33) du boîtier de commande (31). En basculant, ce levier de commande (33) dans un sens, l'utilisateur alimente l'un des électro-aimants (28, 29) du distributeur d'alimentation (27), ce qui place ledit distributeur d'alimentation (27) dans la position ouverte correspondante (127, 227). A l'opposé, lorsque l'utilisateur bascule le levier de commande (33) dans l'autre sens, le distributeur d'alimentation (27) est placé dans son autre position ouverte (227, 127) au moyen de l'autre électro-aimant (29, 28).

Lorsque le sélecteur de mode (32) est placé en mode "AUTO", l'utilisateur peut pivoter automatiquement le corps (3) de la charrue (1) de l'une de ses positions de travail jusque dans l'autre. Pour ce faire, le boîtier de commande (31) comporte un bouton cycle (34). En donnant une impulsion sur le bouton cycle (34), l'utilisateur déclenche le cycle de retournement. Le boîtier de commande (31) pilote alors automatiquement le distributeur d'alimentation (27) grâce à au moins un temporisateur (T1, T2, T3). Dans l'exemple ci-représenté, le boîtier de commande (31) comporte trois temporisateurs (T1, T2, T3) et quatre dispositifs de détection et de commande (R1, R2, R3, R4). Chaque dispositif de détection et de commande (R1, R2, R3, R4) comporte un élément de détection (B1, B2, B3, B4) correspondant et au moins un élément de commande (C11, C12, C13, C14, C21, C22, C23, C31, C32, C33, C41, C42) respectif. Les temporisateurs (T1, T2, T3) et les dispositifs de détection et de commande (R1, R2, R3, R4) de cette charrue (1) selon l'invention fonctionnent de la manière suivante :

Lorsque l'utilisateur appuie sur le bouton cycle (34) - le sélecteur de mode (32) étant en position "AUTO" - l'élément de détection (B1) du premier dispositif de détection et de commande (R1) détecte l'action sur le bouton (34). Dès lors, cette information de début de cycle est mémorisée au moyen d'un premier élément de commande (C11) du premier dispositif de détection et de commande (R1). De cette sorte, une impulsion sur le bouton (34) de la part de l'utilisateur suffit à commander l'ensemble du cycle. Au moins sensiblement au même moment, une information de début de cycle est communiquée à l'utilisateur à l'aide d'un deuxième élément de commande (C12) du premier dispositif de détection et de commande (R1). Dans l'exemple ci-représenté, le deuxième élément de commande (C12) allume un voyant cycle (35) implanté sur le boîtier de commande (31). Avantageusement, ce voyant de cycle (35) est un voyant clignotant intégré au bouton cycle (34).

Suite à la détection de l'action sur le bouton cycle (34), le premier temporisateur (T1) est démarré au moyen d'un troisième élément de commande (C13) du premier dispositif de détection et de commande (R1) et le premier électro-aimant (28) du distributeur d'alimentation (27) est alimenté grâce à un quatrième élément de commande (C14) dudit premier dispositif de détection et de commande (R1).

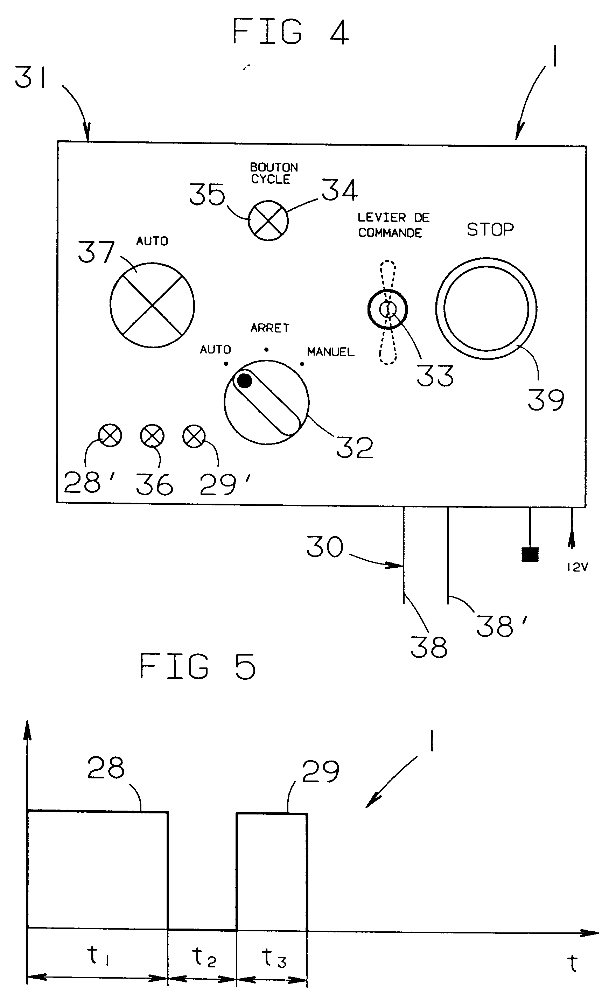

Au bout d'une première durée de fonctionnement préréglée (figure 5) qui est déterminée par le premier temporisateur (T1), l'élément de détection (B2) du deuxième dispositif de détection et de commande (R2) détecte la fin de la temporisation du premier temporisateur (T1).

Dès lors, le deuxième temporisateur (T2) est démarré au moyen d'un premier élément de commande (C21) du deuxième dispositif de détection et de commande (R2) et l'alimentation du premier électro-aimant (28) du distributeur d'alimentation (27) est coupée à l'aide d'un deuxième organe de commande (C22) dudit deuxième dispositif de détection et de commande (R2).

Après une deuxième durée de fonctionnement préréglée (t2) qui est déterminée par le deuxième temporisateur (T2), l'élément de détection (B3) du troisième dispositif de détection et de commande (R3) détecte la fin de la temporisation du deuxième temporisateur (T2). Ce faisant, le troisième temporisateur (T3) est démarré au moyen d'un premier élément de commande (C31) du troisième dispositif de détection et de commande (R3) et le deuxième électro-aimant (29) du distributeur d'alimentation (27) est commandé à l'aide d'un deuxième élément de commande (C32) dudit troisième dispositif de détection et de commande (R3).

Après une troisième dureé de fonctionnement préréglée (t3) qui est déterminée par le troisième temporisateur (T3), l'élément de détection (B4) du quatrième dispositif de détection et de commande (R4) détecte la fin de la temporisation du troisième temporisateur (T3). A partir de cet instant, l'alimentation du deuxième électro-aimant (29) du distributeur d'alimentation (27) est coupée à l'aide d'un premier élément de commande (C41) du quatrième dispositif de détection et de commande (R4) et le cycle est arrêté au moyen d'un deuxième organe de commande (C42) dudit quatrième dispositif de détection et de commande (R4). La fin du cycle est alors détectée par l'élément de détection (B1) du premier dispositif de détection et de commande (R1) qui éteint le voyant cycle (35) à l'aide du deuxième élément de commande (C12).

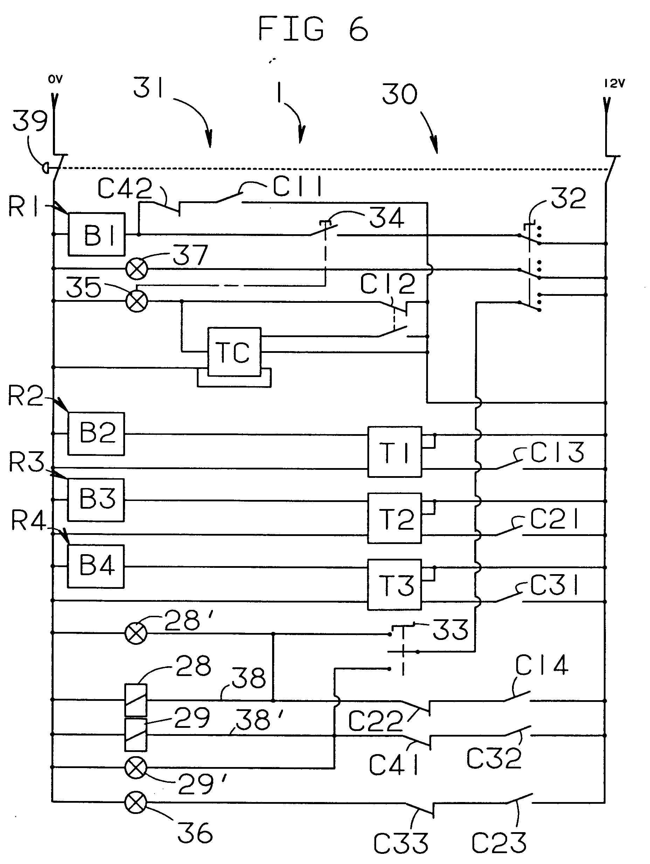

Des figures 4 et 6, il ressort également que l'utilisateur est informé en détail du déroulement du cycle. En effet, deux voyants (28', 29') implantés sur le boîtier de commande (31) indiquent respectivement à l'utilisateur quel est l'électroaimant (28, 29) du distributeur d'alimentation (27) qui est commandé, tandis qu'un troisième voyant (36) s'allume lors de la phase intermédiaire. Le troisième voyant (36) est contrôlé au moyen d'un troisième élément de commande (C23) du deuxième dispositif de détection et de commande (R2) et d'un troisième élément de commande (C33) du troisième dispositif de détection et de commande (R3). Grâce à ces trois voyants (28', 36, 29'), le conducteur peut suivre et surveiller le bon déroulement du cycle sans être obligé de tourner la tête.

De plus, on peut encore observer que le boîtier de commande (31) comporte un voyant "AUTO" (37) indiquant que le sélecteur de mode (32) est placé en mode "AUTO" et un bouton arrêt d'urgence (39) permettant de couper instantanément l'alimentation du vérin de retournement (7) et du vérin de réglage de la largeur de travail (17).

Comme dit précédemment, le boîtier de commande (31) est installé dans le tracteur (2) près du conducteur. Le boîtier de commande (31) est en fait branché sur le circuit électrique du tracteur (2) et il commande les électro-aimants (28, 29) du distributeur d'alimentation (27). Dans l'exemple ci-décrit, le distributeur d'alimentation (27) est implanté sur la charrue (1) et relié au boîtier de commande (31) par l'intermédiaire de fils électriques (38, 38'). Etant donné que le boîtier de commande (31) ne comporte pas d'organe hydraulique, il est facile à installer dans la cabine du tracteur (2).

Tel que visible sur la figure 2, le distributeur d'alimentation (27), la valve de séquence (24) et le bloc de retournement (23) sont avantageusement implantés dans le proche voisinage les uns des autres et fixés au vérin de retournement (7). De ce fait, le distributeur d'alimentation (27), la valve de séquence (24) et le bloc de retournement (23) peuvent aisément être raccordés entre eux.

L'alimentation du distributeur d'alimentation (27) est réalisée depuis le tracteur (2) au travers de deux conduites (41, 42) du circuit d'alimentation (26). A cet égard, il faut remarquer que le distributeur d'alimentation (27) présente dans sa position fermée (327), une boucle (43) mettant en contact les deux conduites (41, 42). Grâce à un tel agencement, le distributeur hydraulique correspondant (44) du tracteur (2) peut être mis et laissé dans une position ouverte (144) dans laquelle la pompe à cylindrée fixe (40) du tracteur (2) peut alimenter en continu le distributeur d'alimentation (27).

La charrue (1) selon l'invention fonctionne de la manière suivante.

Au transport, la bielle d'attelage supérieure (45) de l'attelage trois points (5) est desaccouplée, de sorte que la structure d'attelage (4) ne soit liée qu'aux bras inférieurs (46) dudit attelage trois points (5). Le corps (3) est verrouillé par rapport à la structure d'attelage (4) dans sa position médiane de transporte et s'appuie à l'arrière sur une roue (non représentée). Grâce à cet agencement, la charrue (1) peut aisément être transportée.

Pour amener la charrue (1) dans la position de travail désirée, l'utilisateur descend tout d'abord du tracteur (2) pour mettre en place la bielle d'attelage supérieure (45). Ensuite, il lève la charrue (1) au moyen du dispositif de relevage (47) du tracteur (2) afin de placer la roue en position de travail et de retirer le dispositif de verrouillage (18) du corps (3).

Après être remonté dans la cabine du tracteur (2), il place le sélecteur de mode (32) du boîtier de commande (31) en mode "MANUEL" et le distributeur hydraulique (44) du tracteur (2) en position ouverte (144). Dès lors, la pompe à cylindrée fixe (40) fait circuler l'huile dans la conduite (41), la boucle (43) du distributeur d'alimentation (27) et la conduite (42) pour retourner au tracteur (2). En poussant le levier de commande (33) dans un sens, l'utilisateur pilote l'un (28) des deux électro-aimants (28, 29), ce qui alimente le vérin de retournement (7) via le distributeur d'alimentation (27), la valve de séquence (24) et le bloc de retourne-ment (23). Ce faisant, le corps (3) est pivoté au moyen du vérin de retournement (7) dans la position de travail définie par la butée réglable respective (21). Pour terminer la mise en position de travail du corps (3), l'utilisateur pousse le levier de commande (33) dans le sens opposé, ce qui alimente le vérin de réglage de la largeur de travail (17) afin de remettre la charrue (1) dans la largeur de travail initialement réglée.

Le vérin de réglage du déport et du dévers (16), quant à lui est alimenté séparément, d'une manière connue de l'homme de l'art et qui ne sera pas décrite.

Avant de commencer à travailler, l'utilisateur place encore le sélecteur de mode (32) en mode "AUTO". Le travail peut alors débuter.

Après avoir travaillé une bande de terre du champ, l'utilisateur lève la charrue (1) à l'aide du dispositif de relevage (47) du tracteur (2). Lorsque la charrue (1) est suffisamment levée pour être retournée, l'utilisateur donne uniquement une impulsion sur le bouton cycle (34) et commence à manoeuvrer le tracteur (2) en bout de champ pour placer la charrue (1) en face de la bande de terre voisine à travailler.

L'impulsion sur le bouton cycle (34) déclenche le cycle (figure 5), c'est-à-dire que durant la première durée de fonctionnement (t1), le premier électroaimant (28) est commandé, ce qui entraîne le repliage de la charrue (1) suivi du retournement du corps (3) de ladite charrue (1). Avantageusement, la première durée de fonctionnement (t1) est égale ou légèrement supérieure au temps effectivement nécessaire. De ce fait, lorsque la première durée de fonctionnement (t1) est écoulée et que la deuxième durée de fonctionnement (t2) démarre, il ne reste plus qu'à replacer la charrue (1) dans la largeur de travail précédente. La deuxième durée de fonctionnement (t2) sert en fait de transition entre la commande des deux électro-aimants (28, 29). Cette deuxième durée de fonctionnement (t2) est donc relativement courte et pourrait même dans certaines réalisations selon l'invention être supprimée. Dès que la deuxième durée de fonctionnement (t2) est écoulée, la troisième durée de fonctionnement (t3) démarre durant laquelle le deuxième électro-aimant (29) est commandé. Ce faisant, la charrue (1) est ramenée dans la largeur de travail précédente. Comme pour la première durée de fonctionnement (t1), la troisième durée de fonctionnement (t3) est égale ou légèrement supérieure au temps effectivement nécessaire pour ramener la charrue (1) dans sa largeur de travail précédente. A la fin de la troisième durée de fonctionnement (t3), le cycle s'arrête.

L'impulsion sur le bouton cycle (34) a donc déclenché automatiquement le passage de la charrue (1) de l'une de ses positions de travail jusque dans son autre position de travail. Durant ce temps, l'utilisateur a les mains libres et peut manoeuvrer en toute sécurité le tracteur (2). Par ailleurs, un rapide coup d'oeil sur les voyants (28', 36, 29') du boîtier de commande (31) suffit à l'utilisateur pour connaître l'état d'avancement du cycle.

Dès que le cycle de retournement est terminé et la charrue (1) placée en face de la nouvelle bande de terre à travailler, le travail peut reprendre. A l'autre bout du champ, le retournement suivant s'effectue de la même manière que précédemment décrit. A savoir, l'utilisateur donne une impulsion sur le bouton cycle (34) et le retournement s'effectue automatiquement.

A chaque impulsion sur le bouton cycle (34), le corps (3) de la charrue (1) est donc automatiquement retourné. A cet égard, il faut observer que le corps (3) de la charrue (1) ci-décrite peut aussi être amené de la position de transport jusque dans l'une des positions de travail en donnant une impulsion sur le bouton cycle (34).

Toutefois, pour modifier l'aplomb des corps de labour (11), l'utilisateur doit faire pivoter le corps (3) en mode "MANUEL" avant d'ajuster la position des butées de réglage (21). De même, le corps (3) ne peut être remis dans sa position de transport qu'en mode "MANUEL" en agissant sur le levier de commande (33).

Cette mise en position de transport du corps (3) peut aisément être déduite de la précédente description.

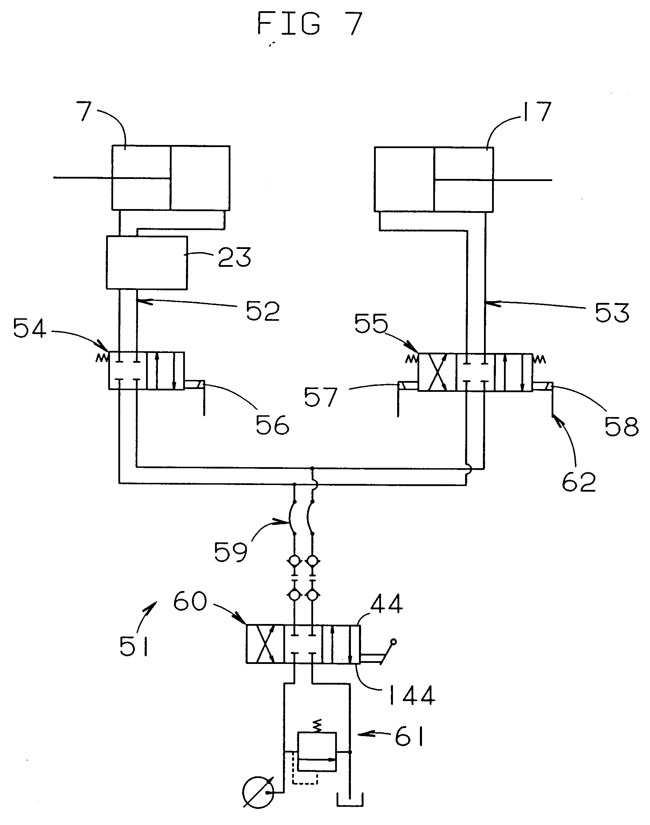

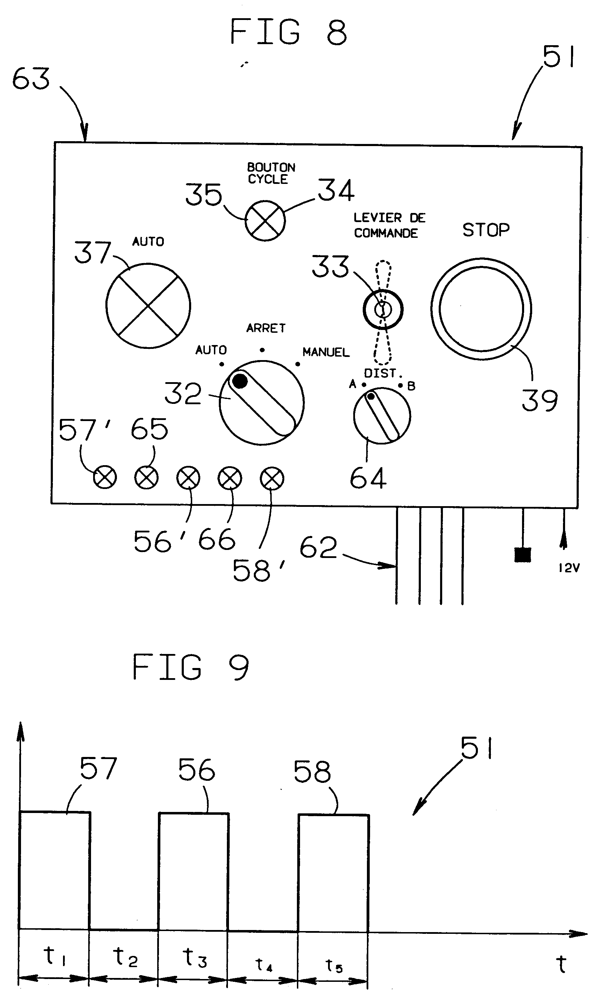

Les figures 7 à 9 montrent un autre exemple de réalisation d'une charrue réversible portée (51) selon l'invention. Les différences entre la présente charrue (51) et la charrue (1) précédemment décrite sont les suivantes.

La présente charrue (51) comporte deux dispositifs de manoeuvre (52, 53) alimentés par un circuit d'alimentation (59). Le circuit d'alimentation (59) comporte deux distributeurs d'alimentation (54, 55) alimentant chacun un dispositif de manoeuvre (52, 53) correspondant. Dans l'exemple ci-représenté, chaque distributeur d'alimentation (54, 55) est piloté par au moins un électro-aimant (56, 57,58) et est alimenté depuis le tracteur (60) auquel est attelée la charrue (51). Etant donné que dans l'exemple ci-représenté, le tracteur (60) comporte une pompe à cylindrée variable (61), les deux distributeurs d'alimentation (54, 55) ne comportent pas de boucle et sont alimentés en parallèle.

Le circuit de commande (62), quant à lui, comporte un boîtier de commande (63) qui comprend, en plus par rapport au boîtier de commande précédent (31), un sélecteur de distributeur (64) et des voyants supplémentaires (57', 65, 56', 66, 58') montrant le déroulement du cycle. Le sélecteur de distributeur (64) permet de sélectionner en mode "MANUEL" le dispositif de manoeuvre (52, 53) que l'on désire alimenter en agissant sur le levier de commande (33).

A l'opposé, en mode "AUTO", une action sur le bouton cycle (34) commande, grâce à des temporisateurs (non représentés) les deux distributeurs d'alimentation (54, 55), de sorte à amener le corps (3) de l'une de ses positions de travail dans son autre position de travail, comme cela est le cas dans l'exemple précédemment décrit.

Par rapport à la charrue (1) précédente, la présente charrue (51) ne nécessite cependant pas de valve de séquence (24) et permet en mode "MANUEL" de commander indépendamment l'un quelconque des deux vérins (7, 17).

Du reste, le fonctionnement de la présente charrue (51) peut aisément être déduit de la charrue précédente (1) et ne sera de ce fait pas redécrit.

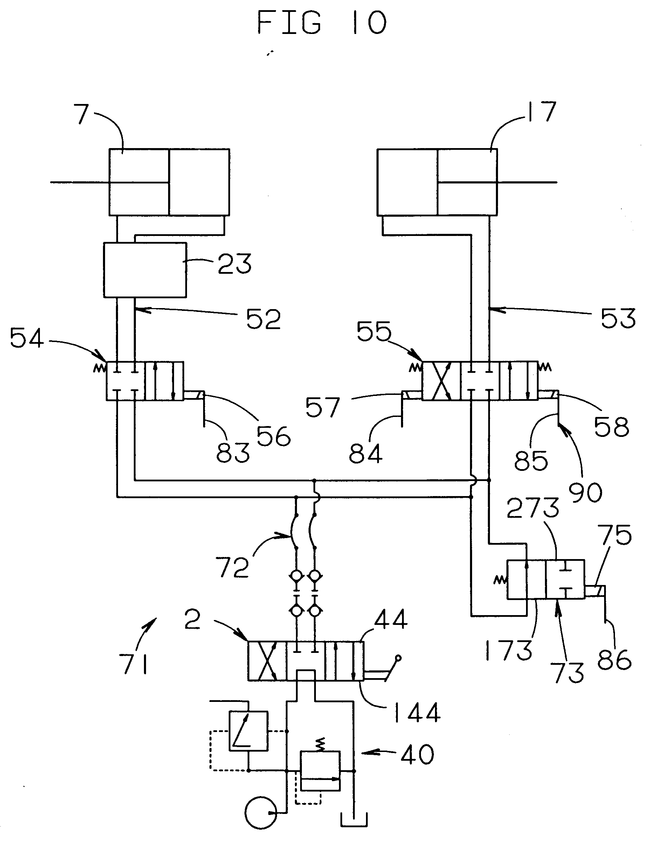

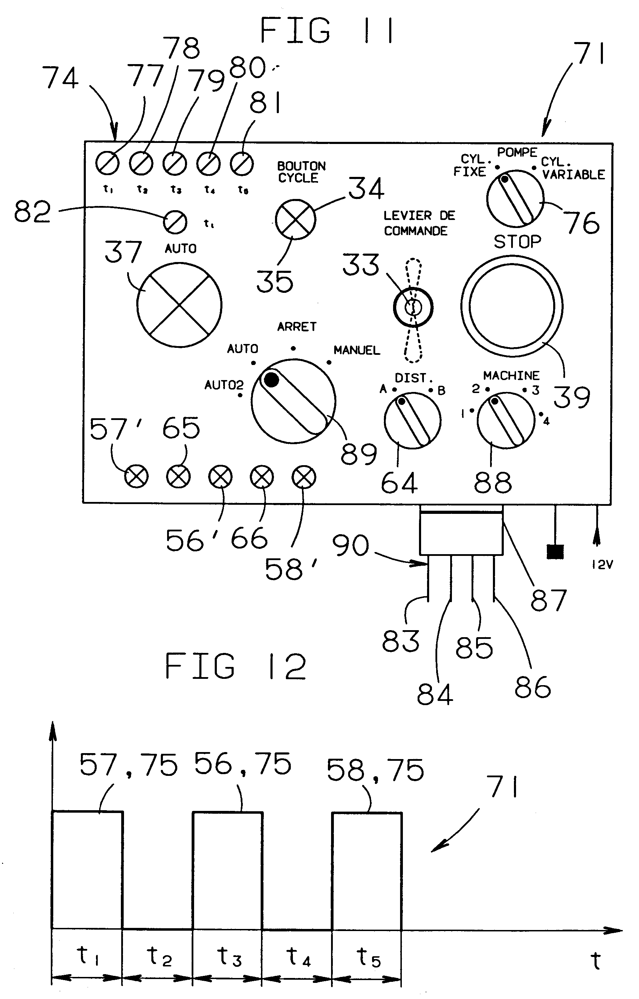

Les figures 10 à 12 montrent un troisième exemple de réalisation d'une charrue (71) selon l'invention. Celle-ci comporte tous les moyens de la charrue (51). Toutefois, la présente charrue (71) est attelée à un tracteur (2) comportant une pompe à cylindrée fixe. De ce fait, le présent circuit d'alimentation (72) comporte, en sus par rapport au circuit d'alimentation précédent (59), un distributeur (73) du type "2/2" piloté grâce à un électro-aimant (75). Lorsque aucun distributeur d'alimentation (54, 55) n'est piloté, ce distributeur (73) joue le rôle de la boucle (43) sur la charrue (1). Le distributeur (73) peut occuper deux positions (173, 273). Dans la première position (173), le distributeur (73) joue le rôle de la boucle (43) et dans la deuxième position (273), le distributeur (73) est fermé. La mise dans la position choisie est pilotée depuis le boîtier de commande (74), de sorte que si aucun des distributeurs d'alimentation (54, 55) n'est piloté, le distributeur (73) est dans sa première position (173) et si un distributeur d'alimentation (54, 55) est piloté, le distributeur (73) est amené dans sa deuxième position (273) (figure 12). Ainsi, la pompe à cylindrée fixe (40) du tracteur (2) peut fonctionner normalement.

Sur la figure 11, il apparaît que le boîtier de commande (74) comporte un sélecteur de pompe (76) pouvant occuper deux positions : une première position correspondant aux pompes à cylindrée fixe (40) et une deuxième position correspondant aux pompes à cylindrée variable (61) (telle que la pompe décrite dans l'exemple de réalisation précédent). Si l'utilisateur attelle la charrue (71) à un tracteur (60) comportant une pompe à cylindrée variable (61), il place le sélecteur de pompe (76) dans sa deuxième position (cylindrée variable). En effet, lorsque le sélecteur de pompe (76) est placé dans sa deuxième position (cylindrée variable), le distributeur (73) est maintenu dans sa deuxième position (273), c'est-à-dire dans sa position fermée.

Sur la figure 11, il apparaît également que le boîtier de commande (74) comporte des éléments de réglage (77, 78, 79, 80, 81) servant à régler respectivement les durées de fonctionnement correspondantes (t1, t2, t3, t4, t5) donnée par les temporisateurs (T1, T2, T3...).

Ces éléments de réglage (77, 78, 79, 80, 81) permettent de régler individuellement la durée de fonctionnement (t1, t2, t3, t4, t5) de chaque phase sans pour autant modifier les autres durées de fonctionnement (t1, t2, t3, t4, t5).

Le boîtier de commande (74) comporte aussi un réglage centralisé (82) des temporisateurs permettant d'augmenter ou de diminuer simultanément l'ensemble des durées de fonctionnement (t1, t2, t3, t4, t5). De cette sorte, l'utilisateur peut installer rapidement la charrue (71) avec le boîtier de commande (74) sur un autre tracteur (2), dont le débit moyen de la pompe (40) est différent. Pour éviter tout déréglage accidentel, les éléments de réglage (77, 78, 79, 80, 81) et le réglage centralisé (82) sont par exemple ajustables au moyen d'un tournevis.

La figure 11 montre en sus que les câbles (83, 84, 85, 86) servant à alimenter les électro-aimants (56, 57, 58, 75) correspondants sont connectés au boîtier de commande (74) au moyen d'un connecteur (87). Le connecteur (87) peut aisément être débranché, de sorte à pouvoir conserver le boîtier de commande (74) sur le tracteur (2) lors de la dépose de la charrue (71). Par ailleurs, ce boîtier de commande (74) est aussi prévu pour piloter le circuit d'alimentation d'autres machines agricoles, par exemple d'autres charrues. A cet effet, le boîtier de commande (74) comporte un sélecteur de machine (88) qu'il suffit de placer dans la position correspondant à la machine que l'on attelle et de brancher le connecteur (87) correspondant sur le boîtier de commande (74).

En dernier lieu, il faut encore observer que le boîtier de commande (74) comporte un sélecteur de mode (89) à plusieurs modes automatiques. Ce sélecteur de mode (89) permet de choisir un mode "AUTO 2" dans lequel la charrue (71) est amenée automatiquement d'une position de travail dans la position de transport et vice versa. De ce fait, lorsque le travail est fini, il suffit à l'utilisateur de placer le sélecteur de mode (89) en mode "AUTO 2" et de donner une impulsion sur le bouton cycle (34) pour que le corps (3) soit automatiquement pivoté jusque dans sa position de transport. Avant de débuter le transport, il ne reste plus qu'à verrouiller le corps (3) et à placer la roue (non représentée) dans sa position de transport.

Différentes modifications restent possibles, notamment en ce qui concerne la constitution des divers éléments ou par substitution d'équivalents techniques, sans pour autant sortir du domaine de protection défini par les revendications. Notamment, les temporisateurs, ainsi que les dispositifs de détection et de commande pourraient être des composants électroniques permettant de commander le(s) distributeur(s) d'alimentation.

## Revendications

1. Machine agricole (1 ; 51 ; 71) destinée à être liée à un véhicule moteur(2 ; 60) et comprenant :
- au moins un dispositif de manoeuvre (25 ; 52, 53) comportant chacun au moins un organe de manoeuvre (7, 17) destiné à amener ladite machine agricole (1 ; 51 ; 71) d'une première position dans une deuxième position;
- un circuit d'alimentation (26 ; 59 ; 72), comportant au moins un distributeur d'alimentation (27 ; 54, 55) permettant d'alimenter l' (les) organe(s) de manoeuvre (7, 17) du dispositif de manoeuvre (25 ; 52, 53) correspondant à partir d'une source motrice (40 ; 61);
et
- un circuit de commande (30 ; 62 ; 90) pilotant le circuit d'alimentation (26 ; 59 ; 72) et muni d'un organe de commande (34) au moyen duquel l'utilisateur agit sur le circuit d'alimentation (26 ; 59 ; 72) depuis le véhicule moteur (2 ; 60);
**caractérisée en ce** que :
- le circuit de commande (30 ; 62 ; 90) comporte au moins un temporisateur (T1, T2, T3...) servant à piloter le distributeur d'alimentation (27; 54, 55) durant une durée de fonctionnement prédéterminée correspondante (t1, t2, t3...) ;
- l'organe de commande (34) est un organe de commande à impulsion de sorte que, dès l'instant où l'utilisateur donne ou a donné une impulsion sur l'organe de commande (34), le circuit de commande (30 ; 62 ; 90) pilote automatiquement le circuit d'alimentation (26 ; 59 ; 72) du (des) dispositif(s) de manoeuvre correspondant(s) (25 ; 52, 53) pour amener ladite machine agricole (1 ; 51; 71) de sa première position dans sa deuxième position.

2. Machine agricole selon la revendication 1, **caractérisée en ce** que le circuit de commande (30 ; 62 ; 90) comporte au moins deux temporisateurs (T1, T2, T3...) et que le deuxième temporisateur (T2) démarre au moins sensiblement lorsque la première durée de fonctionnement (t1) est écoulée, de sorte à piloter différemment le distributeur d'alimentation (27 ; 54, 55) ou à piloter un autre distributeur d'alimentation (27 ; 54, 55).

3. Machine agricole selon la revendication 2, **caractérisée en ce** que les durées de fonctionnement (t1, t2, t3...) des temporisateurs (T1, T2, T3...) peuvent être rallongées ou raccourcies au moyen d'un élément de réglage centralisé (82).

4. Machine agricole selon l'une quelconque des revendications 1 à 3, **caractérisée en ce** que la durée de fonctionnement (t1, t2, t3...) de chaque temporisateur (T1, T2, T3...) est ajustable au moyen d'un élément de réglage (77, 78, 79, 80, 81) respectif.

5. Machine agricole selon l'une quelconque des revendications 1 à 4, **caractérisée en ce** que le circuit de commande (30 ; 62 ; 90) comporte des éléments (28', 36, 29' ; 57', 65, 56', 66, 58') destinés à être implantés sur le véhicule moteur (2 ; 60) près de l'utilisateur et lui indiquant l'avancement du cycle.

6. Machine agricole selon la revendication 5, **caractérisée en ce** que lesdits éléments (28', 36, 29'; 57', 65, 56', 66, 58') sont des voyants s'allumant au fur et à mesure de l'avancement du cycle.

7. Machine agricole selon l'une quelconque des revendications 1 à 6, **caractérisée en ce** que :
- chaque distributeur d'alimentation (27 ; 54, 55) comporte une commande électrique (28, 29 ; 56, 57, 58);
et
- le circuit de commande (30 ; 62 ; 90) comporte un boîtier de commande (31 ; 63 ; 74) destiné à être implanté sur le véhicule moteur (2 ; 60) et des câbles électriques (38', 38 ; 83, 84, 85) liant ladite (lesdites) commande(s) électrique(s) (28, 29 ; 56, 57, 58) audit boîtier de commande (31; 63 ; 74).

8. Machine agricole selon la revendication 7, **caractérisée en ce** que lesdits câbles électriques (83, 84, 85, 86) sont liés au boîtier de commande (74) au moyen d'un connecteur (87).

9. Machine agricole selon la revendication 7 ou 8, **caractérisée en ce** que le boîtier de commande (74) comporte un sélecteur de machine (88) permettant d'utiliser ledit boîtier de commande (74) pour une autre machine du même constructeur par exemple.

10. Machine agricole selon l'une quelconque des revendications 1 à 9, **caractérisée en ce** que le circuit d'alimentation (72) comporte un distributeur hydraulique (73) pouvant occuper deux positions : une première position (173) dans laquelle le fluide en provenance de la source motrice (40) retourne directement à ladite source motrice (40) sans alimenter le(s) dispositif(s) de manoeuvre (25 ; 52, 53) et une deuxième position (273) dans laquelle le fluide en provenance de la source motrice (40) peut être utilisé par le(s) distributeur(s) d'alimentation (54, 55) pour alimenter le(s) dispositif(s) de manoeuvre (25 ; 52, 53).

11. Machine agricole selon les revendications 7 et 10, **caractérisée en ce** que ledit distributeur hydraulique (73) est commandé depuis le boîtier de commande (74) au moyen d'un sélecteur de pompe (76).

12. Machine agricole selon l'une quelconque des revendications 1 à 11, **caractérisée en ce** que, lorsque la machine agricole (1 ; 51 ; 71) est arrivée ou est dans sa deuxième position, une autre impulsion sur l'organe de commande (34) de la part de l'utilisateur, pilote automatiquement le circuit d'alimentation (26 ; 59 ; 72), de sorte à replacer ladite machine agricole (1 ; 51 ; 71) dans sa première position.

13. Machine agricole selon l'une quelconque des revendications 1 à 12, **caractérisée en ce** que c'est une machine agricole (1 ; 51 ; 71) travaillant en aller et en retour et dont la première position et la deuxième position sont des positions de travail respectives.

14. Machine agricole selon l'une quelconque des revendications 1 à 13, **caractérisée en ce** que le circuit de commande (30 ; 62 ; 90) comporte un sélecteur de mode (32 ; 89) permettant de sélectionner au moins deux modes de fonctionnement : un premier mode de fonctionnement dans lequel le circuit de commande (30 ; 62 ; 90) pilote automatiquement le circuit d'alimentation (26 ; 59 ; 72) dès que l'utilisateur donne ou a donné une impulsion sur l'organe de commande (34), et au moins un deuxième mode de fonctionnement.

15. Machine agricole selon la revendication 14, **caractérisée en ce** que, dans un deuxième mode de fonctionnement, l'utilisateur peut piloter manuellement le(s) distributeur(s) d'alimentation (27 ; 54, 55) durant le laps de temps qu'il désire.

16. Machine agricole selon la revendication 14 ou 15, **caractérisée en ce** que, dans un mode de fonctionnement différent du premier mode de fonctionnement, la machine agricole (71) peut être amenée, sous l'action d'une impulsion sur l'organe de commande (34), automatiquement de sa première position ou de sa deuxième position dans une troisième position.

17. Machine agricole selon la revendication 16, **caractérisée en ce** que, lorsqu'elle est arrivée ou est dans sa troisième position, une autre impulsion sur ledit organe de commande (34) ramène automatiquement ladite machine agricole (71) dans la première position ou dans la deuxième position.

18. Machine agricole selon la revendication 17, **caractérisée en ce** que la troisième position est une position de transport.

19. Machine agricole selon l'une quelconque des revendications 1 à 18, **caractérisée en ce** quelle est portée par le véhicule moteur (2 ; 90) lorsque l'utilisateur donne une impulsion sur l'organe de commande (34).

20. Machine agricole selon l'une quelconque des revendications 1 à 19, **caractérisée en ce** que c'est une charrue réversible ou une charrue réversible à largeur variable (1 ; 51 ; 71).

## Claims

1. Agricultural machine (1; 51; 71) intended to be connected to a motor vehicle (2; 60) and comprising:
- at least one operating device (25; 52, 53) each comprising at least one operating member (7, 17) intended to bring the said agricultural machine (1; 51; 71) from a first position into a second position;
- a supply circuit (26; 59; 72) comprising at least one supply distributor (27; 54, 55) allowing the operating member(s) (7, 17) of the corresponding operating device (25; 52, 53) to be supplied from a powering source (40; 61); and
- a control circuit (30; 62; 90) controlling the supply circuit (26; 59; 72) and equipped with a control member (34) by means of which the user acts on the supply circuit (26; 59; 72) from the motor vehicle (2; 60);
***characterized in*** that:
- the control circuit (30; 62; 90) comprises at least one timer (T1, T2, T3 ...) used to control the supply distributor (27; 54, 55) for a corresponding predetermined operating time (t1, t2, t3...);
- the control member (34) is an impulse-type control member which means that right from the moment that the user gives or has given an impulse to the control member (34), the control circuit (30; 62; 90) automatically controls the supply circuit (26; 59; 72) of the corresponding operating device(s) (25; 52, 53) in order to bring the said agricultural machine (1; 51; 71) from its first position into its second position.

2. Agricultural machine according to Claim 1, ***characterized in*** that the control circuit (30; 62; 90) comprises at least two timers (T1, T2, T3 ...) and that the second timer (T2) starts at least approximately when the first operating time (t1) has elapsed, so that the supply distributor (27; 54, 55) is controlled differently or so that a different supply distributor (27; 54, 55) is controlled.

3. Agricultural machine according to Claim 2, ***characterized in*** that the operating times (t1, t2, t3...) of the timers (T1, T2, T3 ...) can be lengthened or shortened by means of a centralized adjusting element (82).

4. Agricultural machine according to any one of Claims 1 to 3, ***characterized in*** that the operating time (t1, t2, t3 ...) of each timer (T1, T2, T3 ...) can be adjusted by means of a respective adjusting element (77, 78, 79, 80, 81).

5. Agricultural machine according to any one of Claims 1 to 4, ***characterized in*** that the control circuit (30; 62; 90) comprises elements (28', 36, 29'; 57', 65, 56', 66, 58') intended to be situated on the motor vehicle (2; 60) close to the user and indicating to him the progress through the cycle.

6. Agricultural machine according to Claim 5, ***characterized in*** that the said elements (28', 36, 29'; 57', 65, 56', 66, 58') are lamps which light up in turn as the cycle progresses.

7. Agricultural machine according to any one of Claims 1 to 6, ***characterized in*** that:
- each supply distributor (27'; 54, 55) comprises an electrical control (28, 29; 56, 57, 58); and
- the control circuit (30; 62; 90) comprises a control unit (31; 63; 74) intended to be situated on the motor vehicle (2; 60) and electrical cables (38', 38; 83, 84, 85) connecting the said electrical control(s) (28, 29; 56, 57, 58) to the said control unit (31; 63; 74).

8. Agricultural machine according to Claim 7, ***characterized in*** that the said electrical cables (83, 84, 85, 86) are connected to the control unit (74) by means of a connector (87).

9. Agricultural machine according to Claim 7 or 8, ***characterized in*** that the control unit (74) comprises a machine selector (88) allowing the said control unit (74) to be used for another machine from the same manufacturer for example.

10. Agricultural machine according to any one of Claims 1 to 9, ***characterized in*** that the supply circuit (72) comprises a hydraulic distributor (73) that can occupy two positions: a first position (173) in which the fluid coming from the powering source (40) returns directly to the said powering source (40) without supplying the operating device(s) (25; 52, 53), and a second position (273) in which the fluid coming from the powering source (40) can be used by the supply distributor(s) (54, 55) to supply the operating device(s) (25; 52, 53).

11. Agricultural machine according to Claims 7 and 10, ***characterized in*** that the said hydraulic distributor (73) is controlled from the control unit (74) by means of a pump selector (76).

12. Agricultural machine according to any one of Claims 1 to 11, ***characterized in*** that when the agricultural machine (1; 51; 71) has reached or is in its second position, another impulse on the control member (34) from the user, automatically controls the supply circuit (26; 59; 72) so as to place the said agricultural machine (1; 51; 71) back in its first position.

13. Agricultural machine according to any one of Claims 1 to 12, ***characterized in*** that it is an agricultural machine (1; 51; 71) that works back and forth and whose first position and second position are respective work positions.

14. Agricultural machine according to any one of Claims 1 to 13, ***characterized in*** that the control circuit (30; 62; 90) comprises a mode selector (32; 89) allowing at least two operating modes to be selected: a first operating mode in which the control circuit (30; 62; 90) automatically controls the supply circuit (26; 59; 72) as soon as the user gives or has given an impulse to the control member (34), and at least one second operating mode.

15. Agricultural machine according to Claim 14, ***characterized in*** that, in a second operating mode, the user can control the supply distributor(s) (27; 54, 55) manually for the length of time he wishes.

16. Agricultural machine according to Claim 14 or 15, ***characterized in*** that, in an operating mode which is different from the first operating mode, the agricultural machine (71) can be brought, under the action of an impulse on the control member (34), automatically from its first position or from its second position into a third position.

17. Agricultural machine according to Claim 16, ***characterized in*** that when it has reached or is in its third position, another impulse on the said control member (34) automatically brings the said agricultural machine (71) back into the first position or back into the second position.

18. Agricultural machine according to Claim 17, ***characterized in*** that the third position is a transport position.

19. Agricultural machine according to any one of Claims 1 to 18, ***characterized in*** that it is borne by the motor vehicle (2; 90) when the user gives an impulse to the control member (34).

20. Agricultural machine according to any one of Claims 1 to 19, ***characterized in*** that it is a reversible plough or a reversible variable-width plough (1; 51; 71).

## Patentansprüche

1. Landmaschine (1; 51; 71) zur Verbindung mit einem Motorfahrzeug (2; 60), die
- mindestens eine Betätigungsvorrichtung (25; 52, 53), die jeweils mindestens ein Betätigungsglied (7, 17) zur Führung der Landmaschine (1; 51; 71) aus einer ersten Stellung in eine zweite Stellung aufweist;
- einen Versorgungskreis (26; 59; 72), der mindestens einen Verteiler (27; 54, 55) aufweist, welcher die Versorgung des Betätigungsglieds bzw. der Betätigungsglieder (7, 17) der entsprechenden Betätigungsvorrichtung (25; 52, 53) von einer Antriebsquelle (40; 61) aus gestattet;
und
- einen Steuerkreis (30; 62; 90), der den Versorgungskreis (26; 59; 72) steuert und mit einem Steuerglied (34) versehen ist, mittels dessen der Benutzer vom dem Motorfahrzeug (2; 60) aus auf den Versorgungskreis (26; 59; 72) einwirkt,
aufweist;
***dadurch gekennzeichnet,*** **daß**
- der Steuerkreis (30; 62; 90) mindestens ein Zeitglied (T1, T2, T3...) aufweist, das zur Steuerung des Verteilers (27; 54, 55) während einer entsprechenden vorbestimmten Betriebszeit (t1, t2, t3...) dient;
- es sich bei dem Steuerglied (34) um ein Impulssteuerglied handelt, so daß der Steuerkreis (30; 62; 90) von dem Moment an, in dem der Benutzer einen Impuls an das Steuerglied (34) abgibt oder abgegeben hat, den Versorungskreis (26; 59; 72) der entsprechenden Betätigungsvorrichtung(en) (25; 52, 53) automatisch steuert, um die Landmaschine (1; 51; 71) aus ihrer ersten Stellung in ihre zweite Stellung zu führen.

2. Landmaschine nach Anspruch 1, ***dadurch gekennzeichnet,*** daß der Steuerkreis (30; 62; 90) mindestens zwei Zeitglieder (T1, T2, T3...) aufweist und daß das zweite Zeitglied (T2) zumindest etwa dann, wenn die erste Betriebszeit (t1) abgelaufen ist, derart aktiviert wird, daß es den Verteiler (27; 54, 55) anders steuert oder einen anderen Verteiler (27; 54, 55) steuert.

3. Landmaschine nach Anspruch 2, ***dadurch gekennzeichnet,*** daß die Betriebszeiten (t1, t2, t3...) der Zeitglieder (T1, T2, T3...) mittels eines zentralen Einstellelements (82) verlängert oder verkürzt werden können.

4. Landmaschine nach irgend einem der Ansprüche 1 bis 3, ***dadurch gekennzeichnet,*** daß die Betriebszeit (t1, t2, t3...) jedes Zeitglieds (T1, T2, T3...) mittels eines jeweiligen Einstellelements (77, 78, 79, 80, 81) eingestellt werden kann.

5. Landmaschine nach irgend einem der Ausprüche 1 bis 4, ***dadurch gekennzeichnet,*** daß der Steuerkreis (30; 62; 90) Elemente (28', 36, 29'; 57', 65, 56', 66, 58') aufweist, die nahe dem Benutzer an dem Motorfahrzeug (2; 60) angebracht werden sollen und ihm den Fortgang des Zyklus anzeigen.

6. Landmaschine nach Anspruch 5, ***dadurch gekennzeichnet,*** daß es sich bei den Elementen (28', 36, 29'; 57', 65, 56', 66, 58') um Anzeigeeinrichtungen handelt, die gemaß dem Fortgang des Zyklus aufleuchten.

7. Landmaschine nach irgend einem der Ausprüche 1 bis 6, ***dadurch gekennzeichnet,*** daß
- jeder Verteiler (27; 54, 55) eine elektrische Steuerung (28, 29; 56, 57, 58) aufweist;
und
- der Steuerkreis (30; 62; 90) einen Steuerkasten (31; 63; 74), der an dem Motorfahrzeug (2; 60) angebracht werden soll, und elektrische Kabel (38', 38; 83, 84, 85), die die elektrische(n) Steuerung(en) (28, 29; 56, 57, 58) mit dem Steuerkasten (31; 63; 74) verbinden, aufweist.

8. Landmaschine nach Anspruch 7, ***dadurch gekennzeichnet,*** daß die elektrischen Kabel (83, 84, 85, 86) mittels eines Verbinders (87) mit dem Steuerkasten (74) verbunden sind.

9. Landmaschine nach Anspruch 7 oder 8, ***dadurch gekennzeichnet,*** daß der Steuerkasten (74) einen Maschinenwählschalter (88) aufweist, der beispielsweise die Verwendung des Steuerkastens (74) für eine andere Maschine des gleichen Herstellers gestattet.

10. Landmaschine nach irgend einem der Ansprüche 1 bis 9, ***dadurch gekennzeichnet,*** daß der Versorgungskreis (72) einen hydraulischen Verteiler (73) aufweist, der zwei Stellungen einnehmen kann; eine erste Stellung (173), in der der Fluid aus der Antriebsquelle (40) direkt zu der Antriebsquelle (40) zurückkehrt, ohne die Betätigungsvorrichtung(en) (25; 52, 53) zu versorgen, und eine zweite Stellung (273), in der der Fluid aus der Antriebsquelle (40) von dem (den) Verteiler(n) (54, 55) zur Versorgung der Betätigungsvorrichtung(en) (25; 52, 53) verwendet werden kann.

11. Landmaschine nach den Ansprüchen 7 und 10, ***dadurch gekennzeichnet,*** daß der hydraulische Verteiler (73) mittels eines Pumpenwählschalters (76) vom Steuerkasten (74) aus gesteuert wird.

12. Landmaschine nach irgend einem der Ansprüche 1 bis 11, ***dadurch gekennzeichnet,*** daß, wenn die Landmaschine (1; 51; 71) in ihre zweite Stellung angelangt ist oder sich dort befindet, ein anderer von dem Benutzer an das Steuerglied (34) angelegter Impuls den Versorgungskreis (26; 59; 72) automatisch derart Steuer, daß die Landmaschine (1; 51; 71) wieder in ihre erste Stellung plaziert wird.

13. Landmaschine nach irgend einem der Ansprüche 1 bis 12, ***dadurch gekennzeichnet,*** daß es sich dabei um eine Landmaschine (1; 51; 71) handelt, die im Vorwärts- und Rückwärtsgang betrieben wird und deren erste und zweite Stellung jeweilige Arbeitsstellungen sind.

14. Landmaschine nach irgend einem der Ansprüche 1 bis 13, ***dadurch gekennzeichnet,*** daß der Steuerkreis (30; 62; 90) einen Betriebsartwählschalter (32; 89) aufweist, der die Auswahl mindestens zweier Betriebsweisen gestattet: einer ersten Betriebsweise, in der der Steuerkreis (30; 62; 90) den Versorgungskreis (26; 59; 72) automatisch steuert, sobald der Benutzer einen Impuls an das Steuerglied (34) abgibt oder abgegeben hat, und mindestens einer zweiten Betriebsweise.

15. Landmaschine nach Anspruch 14, ***dadurch gekennzeichnet,*** daß der Benutzer in einer zweiten Betriebsweise den bzw. die Verteiler (27; 54, 55) während vom ihm gewünschter Zeitabläufe manuell steuern kann.

16. Lansmaschine nach Anspruch 14 oder 15, ***dadurch gekennzeichnet, da***ß die Lansmaschine (71) in einer von der ersten Betriebsweise verschiedenen Betriebsweise unter der Wirkung eines an das Steuerglied (34) gegebenen Impulses automatisch aus ihrer ersten Stellung oder ihrer zweiten Stellung in eine dritte Stellung geführt werden kann.

17. Landmaschine nach Anspruch 16, ***dadurch gekennzeichnet,*** daß, wenn sie in ihre dritte Stellung angelangt ist oder sich dort befindet, ein anderer an das Steuerglied (34) gegebener Impuls die Landmaschine (71) automatisch wieder in die erste oder in die zweite Stellung zurückführt.

18. Landmaschine nach Anspruch 17, ***dadurch gekennzeichnet,*** daß es sich bei der dritten Stellung um eine Transportstellung handelt.

19. Landmaschine nach irgend einem der Ansprüche 1 bis 18, ***dadurch gekennzeichnet,*** daß sie von dem Motorfahrzeug (2; 90) getragen wird, wenn der Benutzer einen Impuls an das Steuerglied (34) gibt.

20. Landmaschine nach irgend einem der Ansprüche 1 bis 19, ***dadurch gekennzeichnet,*** daß es sich um einen Umkehrpflug oder einen Umkehrpflug (1; 51; 71) mit veränderlicher Schnittbreite handelt.
